# EUROPEAN PATENT APPLICATION

(11) **EP 4 826 569 A1**
(43) Date of publication of application: **21.10.2026**
(21) Application number: 25800849.9
(22) Date of filing: 28.02.2025
(51) Int. Cl.: G06F 16/9035, B60W 40/09

(54) **DRIVING STYLE CONFIGURATION METHOD AND APPARATUS, MODEL TRAINING METHOD AND APPARATUS, DATA PROCESSING METHOD AND APPARATUS, AND DEVICE**

(71) Applicant: SZ Zhuoyu Technology Co., Ltd., Shenzhen, Guangdong 518055 (CN)
(72) Inventor: MA, Lu, Shenzhen, Guangdong 518055 (CN); WANG, Halfbullet, Shenzhen, Guangdong 518055 (CN); LI, Peiliang, Shenzhen, Guangdong 518055 (CN); HUANG, Jensen, Shenzhen, Guangdong 518055 (CN); JING, Xin, Shenzhen, Guangdong 518055 (CN); CHEN, Xiaozhi, Shenzhen, Guangdong 518055 (CN)
(74) Representative: Bandpay & Greuter
(86) International application number: PCT/CN2025/079702
(87) International publication number: WO 2026/178818

(57) **Abstract**

The present application provides a configuration method, a model training method, and a data processing method for a driving style, an apparatus, and a device. The present application relates to the field of intelligent driving technologies. The method includes: acquiring style configuration information of an autonomous device, obtaining a target driving style based on the style configuration information, and configuring a driving style of the autonomous mobile device based on the target driving style. Through the above method, user's preferences and needs can be identified based on the style configuration information, thereby configuring a driving style that meets the user's expectations, and enhancing user experience.

## Description

### TECHNICAL FIELD

The present application relates to the field of intelligent driving technologies, and in particular, to a configuration method, a model training method, and a data processing method for a driving style, an apparatus, and a device.

### BACKGROUND

An autonomous mobile device is equipped with an intelligent driving system that provides a user with configuration options for a driving style during autonomous driving or assisted driving. For example, the autonomous mobile device is an intelligent driving vehicle, where the intelligent driving system can offer configuration options for the driving style, such as gear selection for car-following distance and percentage limits on maximum speed, so that the intelligent driving system performs to better align with user expectations or needs.

In existing technologies, the driving style of the autonomous mobile device is generally preset by the manufacturer of the autonomous mobile device during the production stage. These preset solutions for the driving style are universal and remain constant once determined. However, in the aforementioned methods, when general users attempt to personalize their driving style, the solutions fail to be well applied to the general users, resulting in poor user experience.

### SUMMARY

The present application provides a configuration method, a model training method, and a data processing method for a driving style, an apparatus, and a device, aiming to address the issue in the existing technologies where preset driving styles fail to be well applied to personalized needs of general users and lead to poor user experience.

In a first aspect, the present application provides a configuration method for a driving style, and the method includes:
acquiring style configuration information of an autonomous mobile device;
obtaining a target driving style based on the style configuration information; and
configuring a driving style of the autonomous mobile device based on the target driving style.

In one possible implementation, the style configuration information includes any one of the following:
a driving control mode selected by a user;
image data and/or audio data collected by the autonomous mobile device; and
position information selected by the user in a style palette, where the style palette includes color zones corresponding to multiple pre-acquired driving styles.

In one possible implementation, when the style configuration information is the driving control mode selected by the user, the obtaining the target driving style based on the style configuration information includes:
determining the target driving style corresponding to the driving control mode based on the driving control mode and a pre-configured mapping relationship; where the mapping relationship includes driving styles corresponding to different driving control modes.

In one possible implementation, the driving control mode is determined based on at least one driving scenario of the following: a congestion scenario, start time at an intersection, dynamics selection for lane changing, comfort during turning, handling approach when being cut in, or keeping a safe distance from an autonomous mobile device during normally travelling.

In one possible implementation, when the style configuration information is the image data and/or the audio data collected by the autonomous mobile device, the obtaining the target driving style based on the style configuration information includes:
processing the image data and/or the audio data based on a pre-acquired data processing model to obtain a style description vector; and
selecting the target driving style corresponding to the style description vector from a preset driving style library; where the driving style library stores style description vectors corresponding to different driving styles.

In one possible implementation, when the style configuration information is the image data, the data processing model is a visual processing model;
when the style configuration information is the audio data, the data processing model is a language processing model; and
when the style configuration information includes the image data and the audio data, the data processing model is a visual-language processing model.

In one possible implementation, the style description vector includes a scenario description vector and/or a preference instruction vector;
where the scenario description vector is used to indicate a driving scenario in which the autonomous mobile device is located, and the preference instruction vector is used to indicate user's preference for the driving style.

In one possible implementation, the selecting the target driving style corresponding to the style description vector from the preset driving style library includes:
selecting, from the driving style library, a driving style corresponding to a target description vector with the highest similarity to the style description vector as the target driving style.

In one possible implementation, the method further includes:
receiving a data processing model sent by a server, and deploying the data processing model.

In one possible implementation, when the style configuration information is the position information selected by the user in the style palette, the obtaining the target driving style based on the style configuration information includes:
determining the driving style as the target driving style when the position information falls within a color zone corresponding to any one of driving styles in the style palette;
determining at least one driving style within a preset range of the position information in the style palette when the position information is out of color zones corresponding to any driving styles; and
determining the target driving style based on the at least one driving style.

In one possible implementation, the determining the target driving style based on the at least one driving style includes:
determining the target driving style based on a distance between a color zone corresponding to each driving style of the at least one driving style and the position information.

In one possible implementation, the method further comprises:
receiving style palette data sent by a server; and
displaying the style palette on a user interface of the autonomous mobile device.

In a second aspect, the present application provides a model training method for a driving style, including:
acquiring multiple training samples, each training sample including data to be processed and a style description vector corresponding to the data to be processed, where the data to be processed includes image data and/or audio data collected by an autonomous mobile device; and
training a deep learning model based on the multiple training samples to obtain a data processing model, where the data processing model is used to analyze input data, to obtain a style description vector of the driving style.

In one possible implementation, the data processing model is any one of a visual processing model, a language processing model, or a visual-language processing model;
where the visual processing model is used to analyze the image data to obtain the style description vector of the driving style;
the language processing model is used to analyze the audio data to obtain the style description vector of the driving style; and
the visual-language processing model is used to analyze the image data and the audio data to obtain the style description vector of the driving style.

In one possible implementation, the style description vector includes a scenario description vector and/or a preference instruction vector;
where the scenario description vector is used to indicate a driving scenario in which the autonomous mobile device is located, and the preference instruction vector is used to indicate user's preference for the driving style.

In a third aspect, the present application provides a data processing method for a driving style, including:
acquiring driving data of multiple users;
obtaining, for each user, a driving style vector corresponding to a user based on driving data of the user; and
performing a dimensionality-reduction and clustering analysis on driving style vectors corresponding to the multiple users to obtain a style palette.

In one possible implementation, the obtaining, for each user, the driving style vector corresponding to the user based on the driving data of the user includes:
analyzing the driving data of the user based on a preset style analysis model to obtain the driving style vector corresponding to the user.

In a fourth aspect, the present application provides a model training method for a driving style, including:
acquiring multiple training samples, each training sample including driving data of one user and a driving style vector corresponding to the driving data; and
training a deep learning model based on the multiple training samples to obtain a style analysis model.

In a fifth aspect, the present application provides a configuration apparatus for a driving style, including:
a first acquisition module, configured to acquire style configuration information of an autonomous mobile device;
a first processing module, configured to obtain a target driving style based on the style configuration information; and
a configuration module, configured to configure a driving style of the autonomous mobile device based on the target driving style.

In a sixth aspect, the present application provides a model training apparatus for a driving style, including:
a second acquisition module, configured to acquire multiple training samples, each training sample including data to be processed and a style description vector corresponding to the data to be processed, where the data to be processed includes image data and/or audio data collected by an autonomous mobile device; and
a second processing module, configured to train a deep learning model based on the multiple training samples to obtain a data processing model, where the data processing model is used to analyze input data, to obtain a style description vector of a driving style.

In a seventh aspect, the present application provides a data processing apparatus for a driving style, including:
a third acquisition module, configured to acquire driving data of multiple users; and
a third processing module, configured to obtain, for each user, a driving style vector corresponding to a user based on driving data of the user; and
an analysis module, configured to perform a dimensionality-reduction and clustering analysis on driving style vectors corresponding to the multiple users to obtain a style palette.

In an eighth aspect, the present application provides a model training apparatus for a driving style, including:
a fourth acquisition module, configured to acquire multiple training samples, each training sample including driving data of one user and a driving style vector corresponding to the driving data; and
a fourth processing module, configured to train a deep learning model based on the multiple training samples to obtain a style analysis model.

In a ninth aspect, the present application provides an electronic device, including: a processor, a memory, and a communication interface;
where the memory stores a computer-executable instruction;
the processor executes the computer-executable instruction stored in the memory to implement the method according to any one of the first aspect.

In a tenth aspect, the present application provides a server, including: a processor, a memory, and a communication interface.
where the memory stores a computer-executable instruction;
the processor executes the computer-executable instruction stored in the memory to implement the method according to any one of the second aspect to the fourth aspect.

In an eleventh aspect, the present application provides a computer-readable storage medium, where the computer-readable storage medium stores a computer-executable instruction which, when executed by a processor, is used to implement the method according to any one of the first aspect to the fourth aspect.

In a twelfth aspect, the present application provides a program product including a computer program which, when the program product runs in a computer, causes the computer to perform the method according to any one of the first aspect to the fourth aspect.

In a thirteenth aspect, the present application provides a computer program which, when executed by a processor, is used to perform the method according to any one of the first aspect to the fourth aspect.

In a fourteenth aspect, the present application provides an autonomous mobile device including the electronic device as described in the ninth aspect.

The present application provides the configuration method, the model training method, and the data processing method for a driving style, the apparatus, and the device. The configuration method includes: acquiring style configuration information of the autonomous device, obtaining the target driving style based on the style configuration information, and configuring the driving style of the autonomous mobile device based on the target driving style. In the aforementioned process, the style configuration information can be analyzed and utilized to identify user's preferences and needs, thereby configuring the target driving style that meets the user's expectations, and enhancing user experience.

### BRIEF DESCRIPTION OF DRAWINGS

The accompanying drawings, which are incorporated in and constitute a part of this specification, illustrate embodiments in accordance with the present application, and serve to explain principles of the present application together with the description.
FIG. 1 is a schematic diagram of an application scenario provided in an embodiment of the present application.
FIG. 2 is a schematic flowchart of a method for processing a driving style provided in Embodiment 1 of the present application.
FIG. 3 is a schematic flowchart of a method for processing a driving style provided Embodiment 2 of the present application.
FIG. 4 is a schematic flowchart of a method for processing a driving style provided in Embodiment 3 of the present application.
FIG. 5 is a schematic flowchart of a method for processing a driving style provided in Embodiment 4 of the present application.
FIG. 6 is a schematic flowchart of a method for processing a driving style provided in Embodiment 5 of the present application.
FIG. 7 is a schematic diagram of a style palette provided in an embodiment of the present application.
FIG. 8 is a schematic flowchart of a method for processing a driving style provided in Embodiment 6 of the present application.
FIG. 9 is a schematic flowchart of a model training method for a driving style provided in Embodiment I of the present application.
FIG. 10 is a schematic diagram illustrating a principle of acquiring a vector database provided in an embodiment of the present application.
FIG. 11 is a schematic diagram illustrating a principle of applying a vector database provided in an embodiment of the present application.
FIG. 12 is a schematic flowchart of a data processing method for a driving style provided in an embodiment of the present application.
FIG. 13 is a schematic flowchart of a model training method for a driving style provided in Embodiment II of the present application.
FIG. 14 is a schematic diagram illustrating a principle of acquiring a style palette provided in an embodiment of the present application.
FIG. 15 is a schematic diagram illustrating a principle of applying a style palette according to an embodiment of the present application.
FIG. 16 is a schematic structural diagram of a configuration apparatus for a driving style provided in an embodiment of the present application.
FIG. 17 is a schematic structural diagram of a model training apparatus for a driving style provided in Embodiment one of the present application.
FIG. 18 is a data processing apparatus for a driving style provided in an embodiment of the present application.
FIG. 19 is a schematic structural diagram of a model training apparatus for a driving style provided in Embodiment two of the present application.
FIG. 20 is a schematic structural diagram of an electronic device provided in an embodiment of the present application.

### DESCRIPTION OF EMBODIMENTS

In embodiments of the present application, a term "and/or" describes an association relationship between associated objects, indicating three relationships. For example, "A and/or B" may represent: the alone presence of A, the simultaneous presence of A and B, or the alone presence of B. A character "/" generally indicates an "or" relationship between a preceding and a following associated objects.

In the embodiments of the present application, a term "multiple" refers to two or more, and other quantifiers are similar thereto.

In order to make the objectives, the technical solutions and the advantages in the embodiments of the present application more clearly, the technical solutions in the embodiments of the present application will be described clearly and completely hereinafter in combination with the accompanying drawings of the embodiments of the present application. Obviously, the embodiments described are only a part of the embodiments of the present application, rather than all of the embodiments of the present application. All other embodiments acquired by those of ordinary skill in the art based on the embodiments of the present application without creative efforts shall fall within the protection scope of the present application.

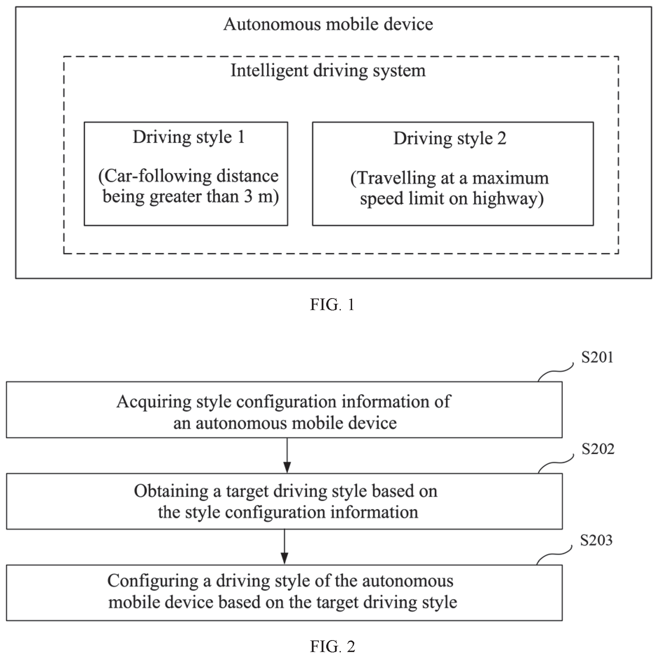

FIG. 1 is a schematic diagram of an application scenario provided in an embodiment of the present application. With reference to FIG. 1, an autonomous mobile device can be equipped with an intelligent driving system, which can perform autonomous driving or assisted driving based on a driving style configured therein.

Optionally, the autonomous mobile device may be flying cars, intelligent driving vehicles, mobile robots, smart boats, or any movable devices equipped with an intelligent driving system.

For example, an intelligent driving vehicle can be equipped with an assisted driving system, which can perform assisted driving based on a driving style 1 and a driving style 2 configured therein. One characteristic of the driving style 1 may be maintaining a car-following distance greater than 3 meters (m), and one characteristic of the driving style 2 may be driving at a maximum speed limit. During slow driving, a vehicle can drive to maintain a car-following distance greater than 3 m based on the driving style 1; and when driving on highway, the vehicle can drive to maintain a maximum speed limit according to the driving style 2.

In related technologies, the driving style of the autonomous mobile device is generally preset by the manufacturer during the production stage based on requirements such as car-following distance or percentage of maximum speed limit. These preset solutions for a driving style are often universal, aiming to meet the basic needs of most users. However, once these driving styles are determined, they are usually constant and immutable. When general users attempt to personalize their driving styles, the solutions fail to be well applied to the general users, resulting in poor user experience.

Regarding the aforementioned issues, during research on personalized driving style solutions, the inventors discovered that each user has varying levels of acceptance and preference for dynamic characteristics of vehicle driving. For example, some users may prefer a conservative driving style, prioritizing safety and smoothness; some users may prefer an aggressive driving style, pursuing speed and excitement; and some other users may lean toward a comfortable driving experience, emphasizing comfort and ride comfort. Therefore, the constant driving styles preset by the manufacturer during the production stage often fail to meet these diverse user's needs. The inventors have discovered through repeated experiments that the personalized driving style can be customized by acquiring style configuration information of the autonomous mobile device. Specifically, the style configuration information of the autonomous mobile device can be acquired, and a target driving style can be acquired based on the style configuration information, and then the driving style of the autonomous mobile device can be configured, to perform dynamic adjustment based on user preferences. Based on this, the present application proposes a configuration method for a driving style to meet the diverse needs of the general users for a driving style and enhance user experience.

The following description provides specific embodiments to illustrate the technical solutions of the present application and how they address the aforementioned technical issues in detail. The following specific embodiments may be combined with each other, and the same or similar concepts or processes in some embodiments may not be illustrated repeatedly. The embodiments of the present application will be described hereinafter with reference to the accompanying drawings.

FIG. 2 is a schematic flowchart of a method for processing a driving style provided in Embodiment 1 of the present application. With reference to FIG. 2, the method includes the following.

S201: acquiring style configuration information of an autonomous mobile device.

In this step, the autonomous mobile device can acquire the style configuration information related to driving styles.

The style configuration information may include any one of the following:
a driving control mode selected by a user;
image data and/or audio data collected by the autonomous mobile device; and
position information selected by the user in a style palette, where the style palette includes color zones corresponding to multiple pre-acquired driving styles.

The driving control mode selected by the user in the style configuration information may be global configuration styles different from a conventional car-following distance or a maximum speed limit, which can subdivide driving scenarios to allow the user to adjust the decision tendencies of the intelligent driving system within these sub-divided scenarios. Where the sub-divided scenarios can be predefined style options.

For better understanding, an intelligent driving vehicle is taken as an example of the autonomous mobile device for illustration below.

For example, the driving control mode selected by the user can be determined based on a traffic congestion scenario, allowing the vehicle to follow a preceding car after the preceding car starts to move for 2 seconds (s).

The image data and/or the audio data collected by the autonomous mobile device in the style configuration information may include image data during driving collected by an image collection device of the autonomous mobile device and audio data, input by the user, collected by an audio collection device thereof. Herein, the image collection device can be a camera, and the audio collection device can be an in-car microphone.

For example, the image data of the autonomous mobile device during driving can be collected via the camera of the autonomous mobile device. The voice input by the user is collected via the microphone inside the vehicle cabin.

The position information selected by the user in the style palette in the style configuration information can refer to a location of a specific style area selected by the user within the style palette. The style palette is a visual interface that displays multiple predefined driving styles, with each style corresponding to a specific color zone. The user can determine preferred style configuration information by performing selection within these zones.

For example, the style palette includes a color zone for a sporty and aggressive style, a color zone for a sporty and neutral style, and a color zone for a smooth and efficient style. The user can select the position of the color zone for the sporty and aggressive style in the style palette to confirm that the preferred style configuration information includes a sporty and aggressive style.

S202: obtaining a target driving style based on the style configuration information.

In this step, the target driving style can be acquired based on the style configuration information. The target driving style is the driving style that matches the style configuration information. Different driving styles exhibit different characteristics. The driving style can be configured based on the style configuration information, enabling the driving performance of the autonomous driving vehicle to align with the corresponding driving style. For example, driving performances may include at least one of the following conditions: 1. aggressiveness during overtaking, reflected by the factors such as altering a waiting time for lane changing during overtaking, a sensitivity for triggering traffic efficiency comparison for lane changing during overtaking, or a minimum distance for lane changing during overtaking against a traffic direction; 2. aggressiveness during lane changing, reflected by the factors such as altering acceleration/deceleration during overtaking, reaction delay of a rear vehicle in a target lane, a maximum deceleration of the rear vehicle in the target lane, or whether solid lines are permitted to cross during lane changing; 3. aggressiveness during detouring, reflected by the factors such as a minimum detour distance from an intersection, a maximum lateral distance during detouring, or whether lines are crossed during detouring; 4. longitudinal aggressiveness, reflected by the factors such as a maximum acceleration/deceleration of this vehicle, a car-following distance of this vehicle, or deviation of a vehicle speed of this vehicle on a road with a map-based speed limit from the map-based speed limit.

When the style configuration information is the driving control mode selected by the user, the target driving style corresponding to the driving control mode can be determined based on the driving control mode and a pre-configured mapping relationship.

For example, based on a driving control mode where this vehicle follows after the preceding car starts to move for 2 s, and the pre-configured mapping relationship, the target driving style corresponding to the driving control mode can be determined as a conservative style.

When the style configuration information is the image data and/or the audio data collected by the autonomous mobile device, the image data and/or the audio data can be processed based on a pre-acquired data processing model, to obtain the target driving style. Herein, the data processing model can be a trained deep learning model. For example, the deep learning model could be a convolutional neural network model.

For example, the image data and/or the audio data collected by the autonomous mobile device during driving can be processed based on a pre-acquired convolutional neural network model to acquire the target driving style. The performance of the target driving style may include automatically reducing speed when identifying a waterlogged road section to safely pass through this section.

When the style configuration information is the position information selected by the user in the style palette, the target driving style can be acquired based on the position information selected by the user.

For example, the target driving style can be determined as a sporty and aggressive style based on the position of the color zone for the sporty and aggressive style selected by the user in the style palette.

S203: configuring a driving style of the autonomous mobile device based on the target driving style.

In this step, the driving style of the autonomous mobile device can be configured based on the target driving style determined based on the style configuration information.

For example, the driving style of the autonomous mobile device can be configured based on the conservative style determined according to the driving control mode selected by the user, or based on the target driving style acquired from the data processing model for recognizing the audio data "automatically reducing speed when identifying the waterlogged road section to safely pass through this section", or based on the sporty and aggressive style selected in the style palette.

In an optional implementation, the driving style of the autonomous mobile device can be configured by the following manner. The autonomous mobile device can be equipped with an end-to-end driving model, which can perform inference in the deep learning model by directly inputting data from various sensors such as a camera, a radar, and a laser radar, and can ultimately output a driving trajectory of the vehicle. Different driving styles can be achieved by adjusting the parameters in the driving model. Changes of these parameters can directly influence the dynamic performance and response characteristics of the vehicle, enabling the vehicle to output expected driving trajectory according to a requirement corresponding to a specific driving style.

Optionally, in order to achieve a personalized and dynamic driving experience, the three solutions included in the style configuration information can be flexibly combined and applied.

For example, firstly, based on the driving control mode where this vehicle follows after the preceding vehicle starts to move for 2 s, the corresponding target driving style 1 can be determined, which may be the conservative style. Then, based on the image data collected by the intelligent driving vehicle, the target driving style 2 can be acquired, the performance of which may include: automatically reducing speed when identifying the waterlogged road section to safely pass through this section. Furthermore, the driving style of the intelligent driving vehicle can be configured to include the target driving style 1 and the target driving style 2.

For another example, firstly, based on the driving control mode, the target driving style 1 can be determined. Next, based on the image data collected by the intelligent driving vehicle, the target driving style 2 is acquired. Then, based on the position information selected by the user in the style palette, the target driving style 3 is determined. Finally, the driving style of the intelligent driving vehicle can be configured to include the target driving style 1, the target driving style 2, and the target driving style 3.

In the embodiments of the present application, the style configuration information of the autonomous device can be acquired to determine the target driving style. Then, based on the target driving style, the driving style of the autonomous mobile device is configured. In the aforementioned process, the target driving style is determined and configured by acquiring the style configuration information of the autonomous device, realizing personalized and dynamic adjustment of the driving experience for the autonomous mobile device, to better meet the diverse needs of the user.

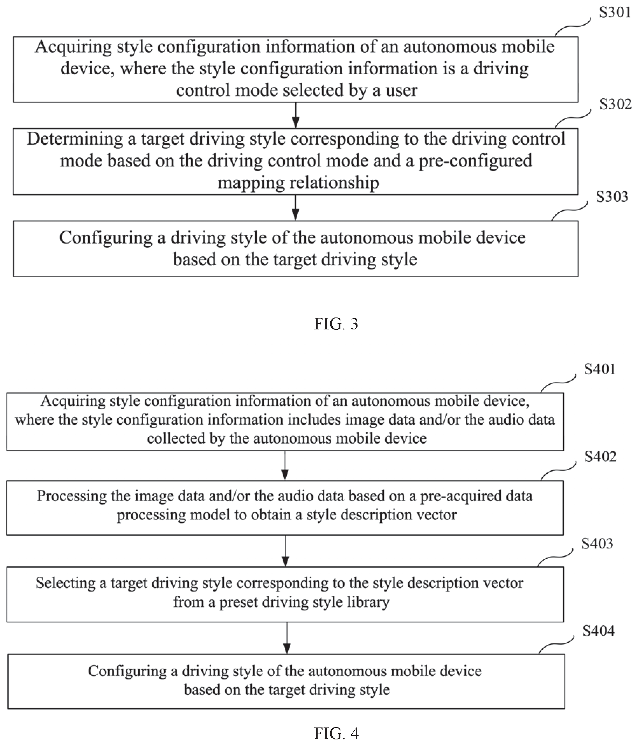

Based on the embodiment shown in FIG. 2, how to configure the driving style of the autonomous mobile device based on the driving control mode selected by the user will be illustrated in detail hereinafter with reference to FIG. 3.

FIG. 3 is a schematic flowchart of a method for processing a driving style provided in Embodiment 2 of the present application. With reference to FIG. 3, the method may include the following.

S301: acquiring style configuration information of an autonomous mobile device, where the style configuration information is a driving control mode selected by a user.

In this step, the style configuration information can be determined by the autonomous mobile device based on the driving control mode selected by the user.

Optionally, the autonomous mobile device can be provided with an interactive interface, which provides multiple options for driving control modes under different scenarios. The user can select an appropriate driving control mode based on their needs and preferences in various driving scenarios.

Optionally, the driving control mode may be determined based on at least one driving scenario, such as a congestion scenario, start time at an intersection, dynamics selection for lane changing, comfort during turning, handling approach when being cut in, or keeping a safe distance from an autonomous mobile device during normally travelling.

When the congestion scenario can refer to a traffic congestion, the intelligent driving vehicle can detect the distance from and the speed of a preceding vehicle by a radar and a camera, automatically adjust its speed to maintain a safe distance, reducing frequent acceleration and braking operations, thereby achieving smooth driving.

For example, based on the congestion scenario, a driving control mode 1 can be determined. Herein, the driving control mode 1 can refer to that when the current traffic congestion is detected and the distance from the preceding vehicle is 5 meters, the intelligent driving vehicle automatically reduces speed to maintain a safe distance when the preceding vehicle decelerates; and when the preceding vehicle accelerates or the lane becomes clear, a current non-congestion scenario is detected, the system gradually returns to a preset cruising speed and car-following distance.

The start time at the intersection can refer to that when waiting for traffic lights at an intersection, the intelligent driving vehicle can automatically determine an optimal start time according to changes of the traffic lights to improve traffic efficiency and reduce waiting time.

For example, based on the starting time at the intersection, a driving control mode 2 can be determined. Herein, the driving control mode 2 can refer to starting within 1 second after the green light turns on. That is, when the traffic signal light is about to change from red to green, the intelligent driving vehicle prepares in advance and automatically controls the accelerator pedal of the vehicle at the moment that the green light turns on, to achieve a quick start.

The dynamics selection for lane changing can refer to choosing an appropriate power output according to current traffic conditions and vehicle performance when a lane-changing opportunity is identified, to achieve safe and efficient lane changing.

For example, based on the dynamics selection for lane changing, a driving control mode 3 and a driving control mode 4 can be determined. Herein, the driving control mode 3 can refer to that on urban roads with relatively dense traffic, and only when the preceding lane is severely congested and the adjacent lane is clearly unobstructed, the intelligent driving vehicle changes a lane, and selects a lower power output, to complete the lane changing smoothly. The driving control mode 4 can refer to that on highway with relatively high traffic volume and where vehicles move at faster speeds, the intelligent driving vehicle frequently utilize lane-changing opportunities to maintain a higher driving speed. When detecting an opportunity for a higher speed in an adjacent lane, the intelligent driving vehicle selects a greater power output for a swift lane changing.

Exemplarily, regarding the driving control mode 4, the intelligent driving vehicle travels on a highway lane with a speed limit of 120 km/h. When detecting that there is a preceding vehicle traveling slowly in the current lane, while the left adjacent lane is clear and unobstructed, upon identifying this lane-changing opportunity, the intelligent driving vehicle can opt for higher power output, accelerate swiftly, and complete lane changing to reach a speed close to 120 km/h.

The comfort during turning can refer to at what speed the intelligent driving vehicle can be used for turning during turning. Faster turning will lead to a higher traffic efficiency, but reduce the comfort of the intelligent driving vehicle.

For example, based on the comfort during turning, a driving control mode 5 and a driving control mode 6 can be determined. Herein, the driving control mode 5 can refer to selecting a higher turning speed to improve traffic efficiency under a condition of a larger turning radius and a good road surface. The driving control mode 6 can refer to selecting a lower turning speed to ensure passenger comfort and vehicle stability under a condition of a smaller turning radius or a poor road surface.

Exemplarily, regarding the driving control mode 6, when the turning radius is less than 5 m, the intelligent driving vehicle performs a turn at a speed of 10 km/h.

The handling approach when being cut in can refer to that when other vehicles tend to cut in, the intelligent driving vehicle can choose to give its lane conservatively, or hold its lane while ensuring safety. The way of giving its lane conservatively can provide consumers with an additional sense of security at the expense of traffic efficiency.

For example, based on the handling approach when being cut in, a driving control mode 7 and a driving control mode 8 can be determined. Herein, the driving control mode 7 can refer to that when detecting other vehicles tend to cut in, the intelligent driving vehicle actively decelerates or maintains its current speed, to give space for the cutting-in vehicle. The driving control mode 8 can refer to that when detecting other vehicles tend to cut in, the intelligent driving vehicle assesses safety, and chooses to accelerate appropriately or maintain its current speed, to reduce the likelihood of being cut in.

Exemplarily, regarding the driving control mode 8, on the highway, the intelligent driving vehicle travels in the middle lane and detects a vehicle in the right lane starts to drift leftward, indicating an intention to cut in, after a quick assessment, the intelligent driving vehicle confirms that there is sufficient safe distance from the cutting-in vehicle and that the road conditions are favorable. Therefore, the intelligent driving vehicle can select to moderately accelerate and maintain a leading position in the current lane to avoid being cut in.

The keeping a safe distance from an autonomous mobile device during normally travelling can refer to that the intelligent driving vehicle keeps a safe distance from a preceding vehicle or a vehicle in the adjacent lane, to ensure driving safety and smoothness.

For example, when the autonomous mobile device travelling normally is a large truck, based on keeping a safe distance from the large truck, a driving control mode 9 and a driving control mode 10 can be determined. Herein, the driving control mode 9 can refer to normally keeping a safe distance from the large truck while ensuring safety. The driving control mode 10 can refer to seeking for an opportunity to overtake quickly and travel away from the large truck.

Exemplarily, regarding the driving control mode 10, when the intelligent driving vehicle is traveling on the highway and encounters a large truck in front, the intelligent driving vehicle can assess the current traffic conditions and road conditions to seek for a safe overtaking opportunity.

It should be noted that the driving scenarios for determining the driving control modes can be further subdivided. For example, the driving control modes can further include driving scenarios under various weather conditions. In sunny days, the intelligent driving vehicle may opt for more aggressive overtaking strategies, utilizing good visibility and road conditions to quickly overtake the large truck. In rainy or foggy days, the intelligent driving vehicle may adjust strategies by increasing the safe distance from the large truck and other vehicles to ensure driving safety under slippery or low-visibility conditions. Additionally, on snowy or icy roads, the intelligent driving vehicle may opt for a more conservative driving mode, avoiding unnecessary overtaking maneuvers to reduce the risk of skidding or losing control.

For example, the style configuration information of the intelligent driving vehicle can be acquired, where the style configuration information refers to the driving control mode 10 selected by the user.

S302: determining a target driving style corresponding to the driving control mode based on the driving control mode and a pre-configured mapping relationship.

In this step, the target driving style corresponding to the driving control mode can be determined based on the driving control mode selected by the user and the pre-configured mapping relationship. Herein, the mapping relationship includes driving styles corresponding to different driving control modes.

For example, the pre-configured mapping relationship may include the driving control modes and the driving style corresponding to each driving control mode as shown in Table 1.

**Table 1**

| Driving control mode | Driving style | Driving control mode | Driving style |
|---|---|---|---|
| 1 | Congestion and travelling slowly | 6 | Comfortable turning |
| 2 | Starting based on signal | 7 | Giving lane for cut-in vehicle |
| 3 | Lane changing smoothly | 8 | Holding lane |
| 4 | Lane changing quickly | 8 | Following safely |
| 5 | Turning efficiently | 10 | Overtaking and travelling away |

It should be noted that the style names corresponding to the driving styles, such as congestion and travelling slowly, starting based on signal, and lane changing smoothly, are merely used to provide a brief description of the styles, and do not impose any limitation on the present application.

For example, based on the driving control mode 10 selected by the user, and the mapping relationship shown in Table 1, the target driving style corresponding to the driving control mode 10 can be determined as the overtaking and travelling away.

In an optional implementation, the user may select multiple driving control modes, and the target driving style corresponding to each driving control mode can be determined based on the pre-configured mapping relationship. For example, when the user selects driving control modes including the driving control mode 1 and the driving control mode 10, based on the mapping relationship shown in Table 1, the target driving style corresponding to the driving control mode 1 can be determined as the congestion and travelling slowly and the target driving style corresponding to the driving control mode 10 can be determined as the overtaking and travelling away.

S303: configuring a driving style of the autonomous mobile device based on the target driving style.

In this step, the driving style of the autonomous mobile device can be configured based on the target driving style determined based on the mapping relationship.

For example, based on the style of the overtaking and travelling away determined by the mapping relationship, the driving style of the intelligent driving vehicle can be configured as the overtaking and travelling away.

For another example, based on the styles of the congestion and travelling slowly and the overtaking and travelling away determined by the mapping relationship, the driving styles of the intelligent driving vehicle is configured to include the congestion and travelling slowly and the overtaking and travelling away.

In the embodiments of the present application, the driving control mode selected by the user can be acquired as the style configuration information of the autonomous mobile device, and then the target driving style corresponding to the driving control mode is determined based on the pre-configured mapping relationship, and finally the corresponding driving style of the autonomous mobile device is configured based on the target driving style. During the above process, the user can select the preferred driving control mode and configure the driving style of the autonomous mobile device to meet the specific needs of the user, thereby providing a personalized driving experience.

Based on the embodiment shown in FIG. 2, how to configure the driving style of the autonomous mobile device based on the image data and/or the audio data collected by the autonomous mobile device will be illustrated in detail hereinafter with reference to FIG. 4.

FIG. 4 is a schematic flowchart of a method for processing a driving style provided in Embodiment 3 of the present application. With reference to FIG. 4, the method may include the following.

S401: acquiring style configuration information of an autonomous mobile device, where the style configuration information includes image data and/or audio data collected by the autonomous mobile device.

In this step, the image data of the autonomous mobile device during movement can be collected via an image collection device, and the audio data of the user can be collected via an audio collection device. Based on the image data and/or the audio data, the style configuration information of the autonomous mobile device is determined.

The image data of the autonomous mobile device during movement is acquired via the image collection device. For example, the image data 1 in front of the intelligent driving vehicle can be collected via a camera, where the image data 1 may include images of waterlogged road sections in front of the intelligent driving vehicle. Based on the image data 1, the style configuration information of the intelligent driving vehicle is determined.

The audio data of the user is collected via the audio collection device. For example, the output voice of the user can be collected via a microphone to acquire audio data 1, where the audio data 1 can refer to that "when encountering a waterlogged road section, the intelligent driving vehicle slows down and travels through the waterlogged road section to prevent skidding". Based on the audio data 1, the style configuration information of the intelligent driving vehicle is determined.

For example, the style configuration information of the intelligent driving vehicle can be acquired, where the style configuration information refers to the image data 1 collected by the intelligent driving vehicle.

S402: processing the image data and/or the audio data based on a pre-acquired data processing model to obtain a style description vector.

In this step, the image data and/or the audio data can be input into the pre-acquired data processing model for processing to obtain the style description vector.

Optionally, when the style configuration information is the image data, the data processing model is a visual processing model; when the style configuration information is the audio data, the data processing model is a language processing model; and when the style configuration information includes both the image data and the audio data, the data processing model is a visual-language processing model.

In a specific implementation, the style description vector can be represented by a high-dimensional feature space. In this high-dimensional feature space, each dimension can correspond to a specific driving style feature or parameter. By quantifying and combining these features or parameters in the high-dimensional space, a comprehensive style description vector can be formed to accurately describe the driving style of the autonomous mobile device.

For example, the style description vector can be a 64-dimensional vector, to describe a relevant driving style. Exemplarily, the 64-dimensional vector can be represented as [1, 2,..., 64], where each numerical value represents a quantitative index of the corresponding feature or parameter.

For example, the image data 1 can be processed through the visual processing model to obtain the style description vector 1.

S403, selecting a target driving style corresponding to the style description vector from a preset driving style library.

In this step, based on the style description vector acquired, the target driving style corresponding to the style description vector can be selected from the preset driving style library.

In a specific implementation, a driving style corresponding to a target description vector with the highest similarity to the style description vector can be selected from the driving style library as the target driving style. Optionally, the style description vectors and the driving styles corresponding to the style description vectors included in the driving style library can be obtained through user calibration, or output through performing reasoning on driving data by a pre-trained style acquisition model.

For example, by analyzing the style description vectors, driving behaviors can be classified into specific driving styles, such as an adventurous style, a cautious style, or a steady style.

For example, the driving style library can include the style description vectors, and the driving style corresponding to each style description vector as shown in Table 2.

**Table 2**

| Style description vector | Driving style |
|---|---|
| A | Adventurous style |
| B | Cautious style |
| C | Steady style |
| D | Sporty style |
| E | Balanced style |

For example, the driving style corresponding to the target description vector with the highest similarity to the style description vector 1 can be selected from the driving style library as the target driving style. Herein, the target description vector can be the style description vector A, which corresponds to an adventurous driving style, thus the target driving style is the adventurous style.

S404: configuring a driving style of the autonomous mobile device based on the target driving style.

For example, based on the adventurous style determined by the style description vector 1, the driving style of the intelligent driving vehicle can be configured as the adventurous style.

In the embodiments of the present application, the image data and/or the audio data collected by the autonomous mobile device can be acquired as the style configuration information of the autonomous mobile device. The image data and/or the audio data is processed by using the pre-acquired data processing model, to obtain the style description vector. Furthermore, the target driving style corresponding to the style description vector can be selected from the predefined driving style library for configuring the driving style of the autonomous mobile device. In the above process, the intelligent driving style configuration can be achieved by utilizing the advanced data processing model and the driving style library, along with the image data and/or the audio data collected by the autonomous mobile device, thereby enhancing user experience.

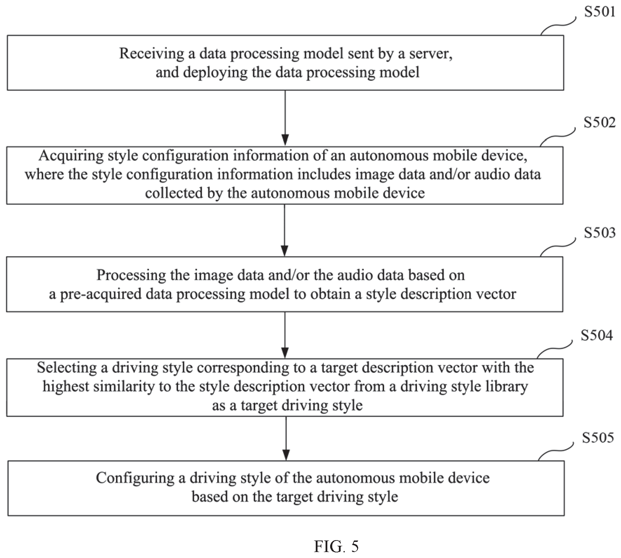

FIG. 5 is a schematic flowchart of a method for processing a driving style provided in Embodiment 4 of the present application. With reference to FIG. 5, on the basis of the embodiment shown in FIG. 4, the method may include the following.

S501: receiving a data processing model sent by a server, and deploying the data processing model.

In this step, the autonomous mobile device can receive the data processing model trained by the server and deploy the data processing model in the local system of the autonomous mobile device. Herein, the data processing model can be a visual processing model, a language processing model, or a visual-language processing model.

For example, the intelligent driving vehicle can receive and deploy the visual processing model sent by the server.

S502: acquiring style configuration information of an autonomous mobile device, where the style configuration information includes image data and/or audio data collected by the autonomous mobile device.

For example, the intelligent driving vehicle can acquire the style configuration information, where the style configuration information is the image data 1 collected by the intelligent driving vehicle.

S503: processing the image data and/or the audio data based on a pre-acquired data processing model to obtain a style description vector.

Optionally, the style description vector includes a scenario description vector and/or a preference instruction vector. The scenario description vector is used to indicate a driving scenario where the autonomous mobile device is located, and the preference instruction vector is used to indicate a user's preference for the driving style.

For example, when the style description vector is the scenario description vector, the image data 1 can be processed based on the visual processing model deployed, to obtain a scenario description vector 1.

For another example, when the style description vector is the preference instruction vector, the image data 1 can be processed based on the visual processing model deployed, to obtain a preference instruction vector 1.

For yet another example, when the style description vector includes the scenario description vector and the preference instruction vector, the image data 1 can be processed based on the visual processing model deployed, to obtain a scenario description vector 2 and a preference instruction vector 2.

S504: selecting a driving style corresponding to a target description vector with the highest similarity to the style description vector from a driving style library as a target driving style.

In this step, based on the style description vector obtained from the data processing model, the driving style corresponding to the target description vector with the highest similarity to the style description vector can be selected from the driving style library, as the target driving style. In the specific implementation, based on the style description vector, the driving style corresponding to the target description vector with the highest similarity to the style description vector can be selected from the driving style library, as the target driving style.

Optionally, the target description vector with the highest similarity to the style description vector can be selected from the driving style library by a similarity measurement method, where the similarity measurement method can be any one of cosine similarity, Euclidean distance, or Manhattan distance.

In an optional implementation, when the style description vector is the scenario description vector or the preference instruction vector, the style description vector may include environmental features and driving style features of the scenario description vector and the preference instruction vector in all dimensions. The target driving style can be determined based on one scenario description vector or one preference instruction vector.

For example, the Euclidean distance metric can be used to select scenario description vector A with the highest similarity to the scenario description vector 1 from the driving style library, as the target description vector. Furthermore, the driving style corresponding to the target description vector can be obtained as the target driving style. Exemplarily, when the scenario description vector A can be the same as the style description vector A, the target driving style can be an adventurous style.

It should be noted that when the style description vector is a scenario description vector, and the description vector with the highest similarity to the scenario description vector selected from the driving style library includes at least two different driving scenario description vectors, then the driving styles corresponding to the at least two different driving scenario description vectors can be recommended to the user through an interactive interface. Based on the user's selection, the target driving style can be determined. Optionally, in addition to selecting the target driving style on the interactive interface by the user, a driving style used recently or frequently corresponding to the driving scenario description vector can also be determined as the target driving style, to better align with user's habits.

For another example, the cosine similarity metric can be used to select preference instruction vector A with the highest similarity to the preference instruction vector 1 from the driving style library, as the target description vector. Furthermore, the driving style corresponding to the target description vector can be obtained as the target driving style. Exemplarily, when the preference instruction vector A can be the same as the style description vector A, the target driving style can be an adventurous style.

In another optional implementation, when the style description vector includes a scenario description vector and a preference instruction vector, the features of both the scenario description vector and the preference instruction vector can be comprehensively considered to determine the target driving style. In this case, more than a reflection of one scenario or preference instruction, the style description vector is a fusion of the two, enabling better adaptation to complex driving environments and personalized needs.

For example, by the Euclidean distance metric, the scenario description vector B with the highest similarity to the scenario description vector 2 is selected from the driving style library, and the preference instruction vector B with the highest similarity to the preference instruction vector 2 is selected from the driving style library. The driving style 1 can be determined based on the scenario description vector B, and the driving style 2 can be determined based on the preference instruction vector 2. Where the driving style 1 may be the most suitable driving style under the current environmental condition, such as selecting a cautious style in heavy traffic, and the driving style 2 may reflect the driver's personal preference, such as a preference for a sporty style.

Furthermore, the driving style 1 and the driving style 2 can be combined via a style fusion strategy, to form a comprehensive target driving style. In the fusion process, weighting can be adjusted according to specific application scenarios and user's needs. For example, when higher safety is required in the current driving environment, more weighting can be imposed to the driving style 1; and when the driver's preference is more important, the weighting of the driving style 2 can be increased.

Finally, the target driving style acquired can be a balanced style, ensuring safety while leading to some driving pleasure.

S505: configuring a driving style of the autonomous mobile device based on the target driving style.

For example, the driving style of the intelligent driving vehicle can be configured based on the adventurous style or the balanced style acquired.

In the embodiments of the present application, the autonomous mobile device can receive and deploy the data processing model sent by the server. The style configuration information acquired is processed via the data processing model, to generate the style description vector, then the driving style corresponding to the target description vector with the highest similarity to the style description vector is selected from the driving style library, as the target driving style. The driving style of the autonomous mobile device is configured based on the target driving style. In the above process, the image data and/or the audio data included in the style configuration information can be processed via the data processing model deployed, to identify user's preference and/or the current driving environment, thereby selecting an appropriate driving style to provide a personalized driving experience.

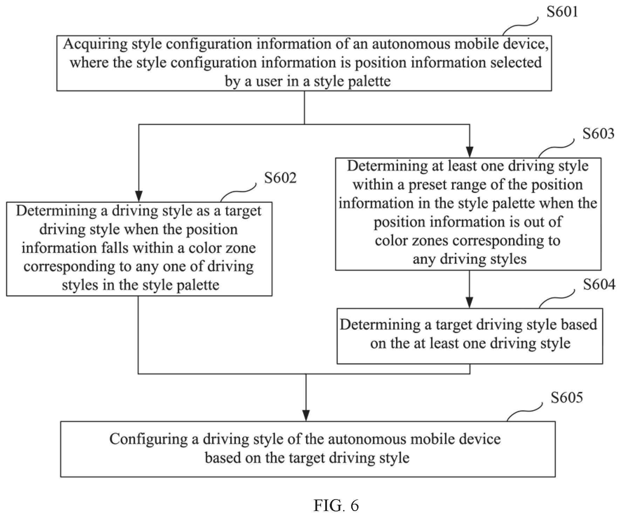

Based on the embodiment shown in FIG. 2, how to configure the driving style of the autonomous mobile device based on the position information selected by the user in the style palette will be illustrated in detail hereinafter with reference to FIG. 6.

FIG. 6 is a schematic flowchart of a method for processing a driving style provided in Embodiment 5 of the present application. With reference to FIG. 6, the method may include the following.

S601: acquiring style configuration information of an autonomous mobile device, where the style configuration information is position information selected by a user in a style palette.

In this step, the autonomous mobile device can acquire the position information selected by the user in the style palette as the style configuration information.

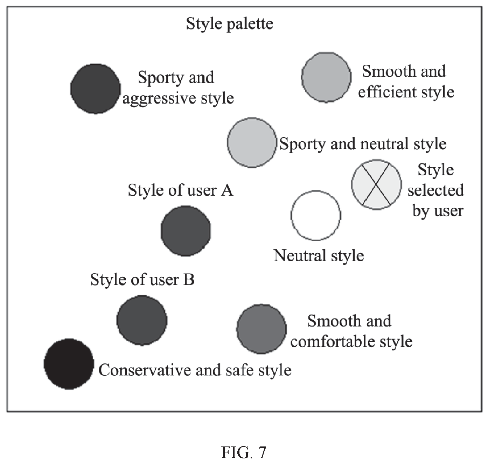

FIG. 7 is a schematic diagram of the style palette provided in an embodiment of the present application. With reference to FIG. 7, the style palette can include various driving styles such as a sporty and aggressive style, a sporty and neutral style, and a smooth and efficient style.

S602: determining a driving style as a target driving style when the position information falls within a color zone corresponding to any one of driving styles in the style palette.

In this step, based on that the position information falls within the zone corresponding to any one of driving styles in the style palette, the driving style can be determined as the target driving style.

For example, based on that the position information falls within the zone corresponding to the sporty and aggressive style in the style palette, the sporty and aggressive style can be determined as the target driving style.

S603: determining at least one driving style within a preset range of the position information in the style palette when the position information is out of color zones corresponding to any driving styles.

In this step, based on that the position information is out of color zones corresponding to any driving styles, the autonomous mobile device can seek at least one driving style within the preset range of the position information in the style palette.

Optionally, the preset range can be set according to user's needs. For example, the horizontal axis of the style palette represents the X-coordinate, the vertical axis thereof represents the Y-coordinate, and the numerical values are expressed in pixel counts. When the preset range includes 5 pixels, it can select a point of the position information as the center, and construct a circular search area with the point as a center, and with a radius of 5 pixels within the style palette. Within this circular area with a radius of 5 pixels, it can find a driving style closest to the current position information.

Optionally, the preset range can also be a rectangular area, a square area, or other shaped areas.

It should be noted that the preset range can also be multiple. For example, when no driving style closest to the current position information is found within the preset range which is a circular range with the radius of 5 pixels, the preset range can be expanded-such as to a circular range with a radius of 10 pixels - to continue searching for the driving style closest to the current position information within this range.

S604: determining a target driving style based on the at least one driving style.

In this step, the target driving style can be determined based on the at least one driving style founded within the preset range of the position information. In a specific implementation, the target driving style can be determined based on a distance between a color zone corresponding to each driving style of the at least one driving style and the position information.

For example, the smooth and efficient style, the sporty and neutral style, and the neutral style all fall within the preset range which is the circular range with the radius of 5 pixels. The center coordinate for the smooth and efficient style is point A (14, 4), the center coordinate for the sporty and neutral style is point B (12, 6), and the center coordinate for the neutral style is point C (14, 9). The center coordinate of the current position information of the user is point O (15, 8). By calculations, it can be found that the distance between the neutral style and the user's position information is the smallest, so the neutral style can be selected as the target driving style.

In an optional implementation, each position in the style palette (which may be a color zone corresponding to each driving style) can correspond to an adjusted parameter set (or parameter vector) for one driving style. The user can determine the parameter set (or parameter vector) corresponding to the driving style by selecting the position information in the style palette, to configure the corresponding driving style (the target driving style). Herein, the corresponding parameter set (or parameter vector) can be determined through a pre-stored mapping relationship between the position and the parameter set. Alternatively, based on a distance between the position information selected by the user and the nearest driving style, it can be obtained by adjusting the parameters of the parameter set (or parameter vector) corresponding to the nearest driving style, where magnitude of such adjustment is smaller for shorter distances and larger for greater distances. The specific magnitude of the adjustment can be determined empirically or based on a preset model.

S605: configuring a driving style of the autonomous mobile device based on the target driving style.

For example, the driving style of the autonomous vehicle can be configured based on the sporty and aggressive style or the neutral style acquired from the style palette.

In the embodiments of the present application, the position information selected by the user in the style palette can be acquired as the style configuration information. When the position information falls within the color zone of the driving style, the driving style is determined as the target driving style; and when the position information is out of any color zone, the at least one driving style is selected within the preset range, to determine the target driving style accordingly. Finally, the driving style of the autonomous mobile device is configured. During the above process, the user can customize the driving style by selecting the position information in the color palette, making it better adapted to personal preferences, thereby enabling the autonomous mobile device to provide a driving experience that that better meets user's needs.

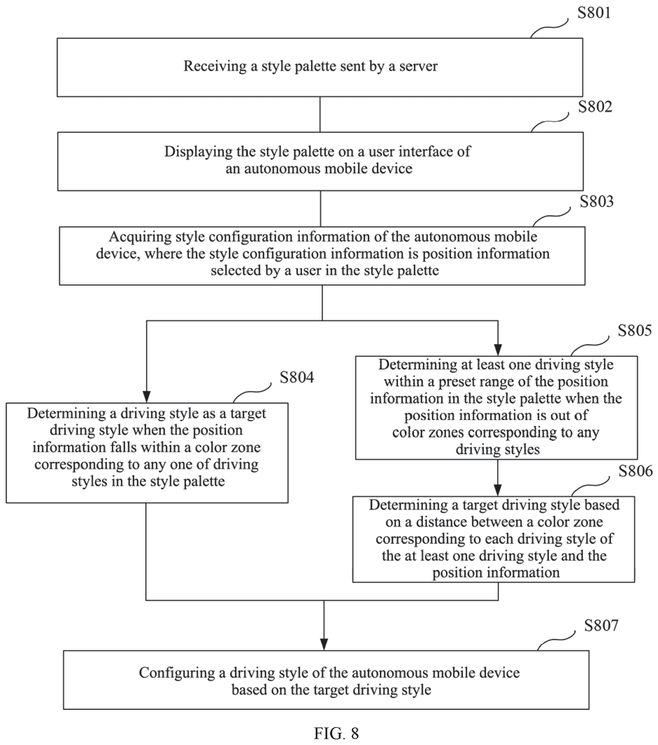

FIG. 8 is a schematic flowchart of a method for processing a driving style provided in Embodiment 6 of the present application. With reference to FIG. 8, based on the embodiment shown in FIG. 6, the method may include the following.

S801: receiving style palette data sent by a server.

In this step, the style palette can be generated by the server and sent to the autonomous mobile device.

In an optional implementation, the style palette data (such as high-dimensional style vectors) may also be sent by the server to the autonomous mobile device, to generate the style palette by the autonomous mobile device.

For example, the server can send high-dimensional style vectors corresponding to various driving styles-such as the aggressive style, the sporty and neutral style, or the smooth and efficient style-to the intelligent driving vehicle, and then the intelligent driving vehicle generates the style palette as shown in FIG. 7.

S802: displaying a style palette on a user interface of an autonomous mobile device.

In this step, after receiving the style palette sent by the server, the autonomous mobile device can display the style palette on its user interface, to generate style configuration information based on position information selected by the user in the style palette.

S803: acquiring style configuration information of the autonomous mobile device, where the style configuration information is position information selected by a user in the style palette.

S804: determining a driving style as a target driving style when the position information falls within a color zone corresponding to any one of driving styles in the style palette.

S805: determining at least one driving style within a preset range of the position information in the style palette when the position information is out of color zones corresponding to any driving styles.

It should be noted that the implementation of the step S803 can refer to that of the step S601, the implementation of the step S804 can refer to that of the step S602, and the implementation of the step S805 can refer to that of the step S603, which will not be repeated herein.

S806: determining a target driving style based on a distance between a color zone corresponding to each driving style of the at least one driving style and the position information.

Optionally, the target driving style can be determined by one of the following two methods.

Method 1: distance minimization. In a specific implementation, the distance between the position information selected by the user and the center of the color zone corresponding to each driving style can be calculated by the autonomous mobile device. The style with the smallest distance to the position information of the user is determined as the target driving style.

Method 2: fusion of driving styles. In specific implementation, all candidate driving styles within the preset range can be determined by the autonomous mobile device based on the position information selected by the user. Based on the distances between the position information selected by the user and the center of the color zone corresponding to each driving style, a weight coefficient is assigned to each candidate driving style based on these distances. Different driving styles are then fused according to their weight coefficients to generate a comprehensive driving style. Generally, a higher weighting coefficient is assigned to the driving style having a closer distance.

For example, the central coordinate of the current position information of the user is point O (15, 8), with a distance of 4 from the smooth and efficient style, with a distance of 3.5 from the sporty and neutral style, and with a distance of 2.5 from the neutral style, respectively. Herein, the center coordinate of the smooth and efficient style is point A (14, 4), the center coordinate of the sporty and neutral style is point B (12, 6), and the center coordinate of the neutral style is point C (14, 9). By calculating the reciprocals of these distances and normalizing them, the weight coefficients are determined as 0.25 for the smooth and efficient style, 0.3 for the sporty and neutral style, and 0.45 for the neutral style. Therefore, different driving styles can be fused based on these weight coefficients by the autonomous mobile device, to generate a comprehensive driving style. Exemplarily, this comprehensive driving style may be a new style, which is close to the neutral style, and can be named "smooth and neutral style".

Optionally, in addition to the two methods mentioned above for determining the target driving style, the target driving style can further be determined through a parameter set (or parameter vector).

For example, the style palette includes multiple color zones, each color zone representing a specific driving style. Each color zone is pre-mapped to a specific parameter set. For example, the red zone may map to a parameter set that configures the vehicle with faster acceleration and more responsive steering, while the blue zone may map to a parameter set that configures the vehicle with smoother acceleration and more stable steering. The user can select a desired driving style by choosing a color zone in the style palette. Based on the color zone selected by the user, the pre-stored mapping relationships can be searched in the style palette, to directly acquire the corresponding parameter set to configure the driving style of the intelligent driving vehicle.

Optionally, when the position selected by the user is between two or more color zones, the parameter set can be dynamically adjusted based on the distance between the selected position and the nearest preset style. For example, when the position information selected by the user falls between the red zone and the blue zone, parameters between the parameter set for the red zone and the parameter set for the blue zone can be adjusted based on a ratio of the distance between the position information selected by the user and the red zone to the distance between the position information selected by the user and the blue zone, to generate a new parameter set. The characteristics of the parameter set are between a red style and a blue style, thereby offering a more personalized driving style choice for the user.

S807: configuring a driving style of the autonomous mobile device based on the target driving style.

For example, the driving style of the intelligent driving vehicle can be configured based on the sporty and aggressive style or the smooth and neutral style acquired from the style palette.

In the embodiments of the present application, the autonomous mobile device can receive and display the style palette sent by the server, and acquire the position information selected by the user in the style palette as the style configuration information. When the position information is within a color zone corresponding to a driving style, the driving style is determined as the target driving style. When the position information is out of any color zones, at least one driving style is selected within the preset range; the target driving style is determined based on the distance between the color zone corresponding to each driving style of the at least one driving style and the position information; finally, the driving style of the autonomous mobile device is configured based on the target driving style. In the above process, by allowing the user to select the position information in the style palette, the autonomous mobile device can adjust driving styles based on user preferences, thereby providing more personalized user experience.

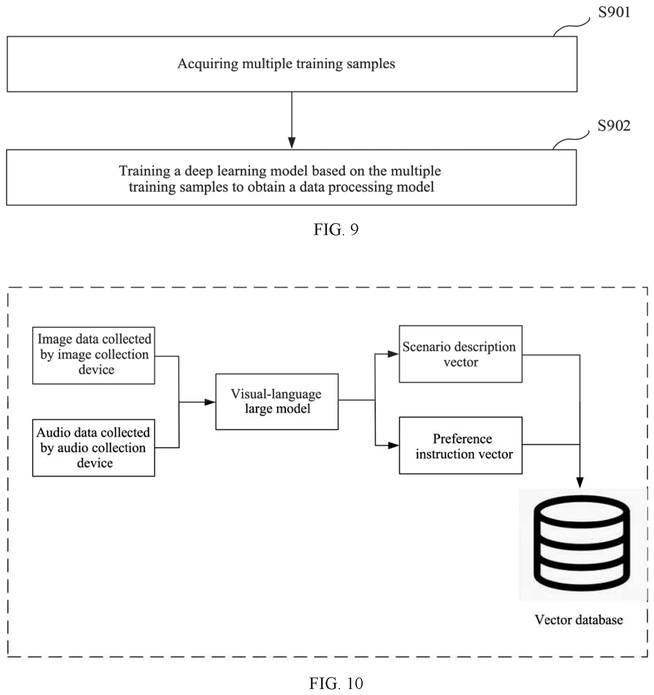

On the basis of the embodiments shown in above FIG. 3 or FIG. 4, the training process of the data processing model will be illustrated in detail hereinafter with reference to FIG. 9. The training process of the data processing model can be performed in a server.

FIG. 9 is a schematic flowchart of a model training method for a driving style provided in Embodiment I of the present application. With reference to FIG. 9, the method may include the following.

S901: acquiring multiple training samples.

In this step, the multiple training samples can be acquired, each training sample including data to be processed and a style description vector corresponding to the data to be processed, where the data to be processed includes image data and/or audio data collected by the autonomous mobile device.

Optionally, the server may acquire the image data and/or the audio data from the autonomous mobile device through various means such as mobile application uploading, application programming interfaces (Application Programming Interface, API), cloud storage services, internet of things platforms, data synchronization mechanisms, or third-party service integration.

Regarding the style description vector of the data to be processed, the user can customize the style description vector when uploading the image and/or audio data, or select the style description vector from a predefined listing.

S902: training a deep learning model based on the multiple training samples to obtain a data processing model.

In this step, the deep learning model can be trained based on the multiple training samples acquired to obtain the data processing model. The data processing model is configured to analyze input data, to obtain the style description vector of the driving style.

Optionally, the data processing model is any one of a visual processing model, a language processing model, or a visual-language processing model.

Herein, the visual processing model is used to analyze the image data to obtain the style description vector of the driving style.

The language processing model is used to analyze the audio data to obtain the style description vector of the driving style.

The visual-language processing model is used to analyze the image data and the audio data to obtain the style description vector of the driving style.

When the data processing model is a visual processing model, each training sample for training the deep model may include image data and a style description vector corresponding to the image data.

Optionally, the deep learning model corresponding to the visual processing model may further include transformer architecture-based visual models, graph neural network (Graph Neural Network, GNN) models, or self-supervised learning models, in addition to convolutional neural network models.

When the data processing model is a language processing model, each training sample for training the deep model may include audio data and a style description vector corresponding to the audio data.

Optionally, the deep learning model corresponding to the language processing model can further include language models based on a recurrent neural network (Recurrent Neural Network, RNN), a long short-term memory (Long Short-Term Memory, LSTM), a gated recurrent unit (Gated Recurrent Unit, GRU), and a transformer architecture, in addition to convolutional neural network models.

When the data processing model is a visual-language processing model, each training sample for training the deep model may include image data, audio data, and style description vectors corresponding to the image data and the audio data. Herein, the audio data is used to describe the image data.

Optionally, the deep learning model corresponding to the visual-language processing model can further be multimodal models based on transformer architecture, graph neural network models, self-supervised learning models, or other models capable of processing multimodal data, in addition to convolutional neural network models.

It should be noted that the selection and application of the aforementioned deep learning models are determined based on different data processing needs. The various models provided only as examples are for illustration, and the types of the deep learning models are not limited in the present application.

In an optional implementation, the style description vector includes a scenario description vector and/or a preference instruction vector.

Herein, the scenario description vector is used to indicate a driving scenario in which the autonomous mobile device is located, and the preference instruction vector is used to indicate user's preference for the driving style.

In the embodiments of the present application, the multiple training samples can be acquired, and the deep learning model is trained based on the training samples to obtain the data processing model. This model can analyze the image data and/or the audio data collected by the autonomous mobile device, to generate the style description vector. Based on this, the driving style of the autonomous mobile device can be configured, to meet user's personalized needs and preferences.

In one possible design, the driving style of the autonomous mobile device can also be configured through a collaboration of multiple data processing models.

FIG. 10 is a schematic diagram illustrating a principle of acquiring a vector database provided in an embodiment of the present application. With reference to FIG. 10, by a visual-language large model in the server, the image data collected by the image collection device and the audio data collected by the audio collection device can be identified and processed to obtain the scenario description vector and the preference instruction vector, which are stored in a vector database. Herein, the visual-language large model can be the visual-language processing model in the above embodiments.

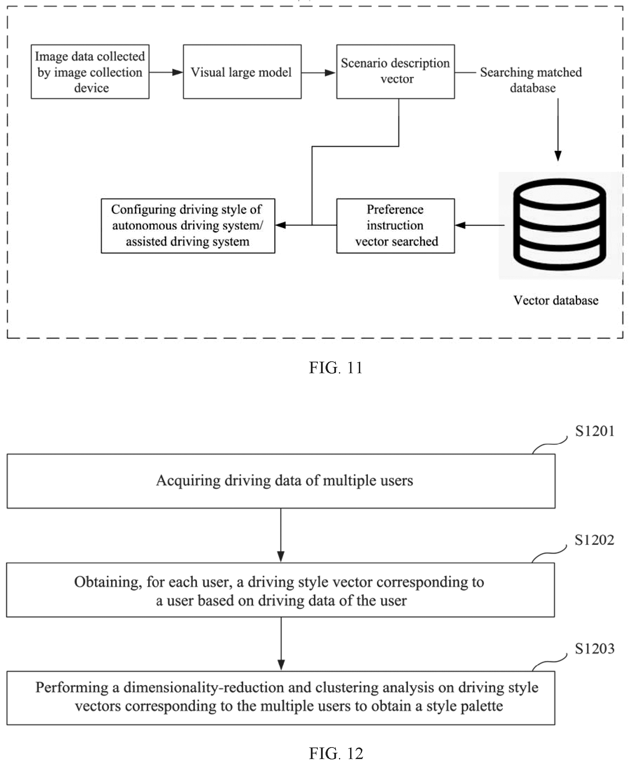

FIG. 11 is a schematic diagram illustrating a principle of applying a vector database provided in an embodiment of the present application. With reference to FIG. 11, by the visual large model, the image data collected by the image collection device can be identified and processed in the autonomous mobile device, to obtain the scenario description vector. A matched database can be searched based on the scenario description vector, and a preference instruction vector can be searched from the vector database. The driving style of the autonomous mobile device can be configured based on the scenario description vector and the preference instruction vector. Herein, the visual large model can be the visual processing model in the above embodiments, and the configuration for the driving style of the autonomous mobile device may include the configuration for the driving style of the autonomous driving system or the assisted driving system.

It should be noted that the visual-language large model in FIG. 10 may be the same as the visual large model in FIG. 11, which can be a visual processing model, a language processing model, or a visual-language processing model and used for acquiring historical configuration information of the autonomous mobile device to obtain its corresponding style description vector, followed by stored. During subsequent use of the model, based on the image data and/or the audio data acquired, the corresponding style description vector can be directly invoked to configure the driving style of the autonomous mobile device, achieving customized style adjustments from the user.

In the embodiments of the present application, based on the collaboration of different data processing models, the autonomous mobile device can better understand and adapt to complex driving environments and user's preferences. The visual-language large model has comprehensive analysis capabilities for multimodal data, while the visual large model focuses on in-depth understanding of the image data. Through this collaboration, it is possible to adjust driving style in real time to adapt to changing environments and user's needs.

On the basis of the embodiments shown in above FIG. 6 or FIG. 8, the process of acquiring the style palette will be illustrated in detail hereinafter with reference to FIG. 12. The process of acquiring the style palette can be performed in the server.

FIG. 12 is a schematic flowchart of a data processing method for a driving style provided in an embodiment of the present application. With reference to FIG. 12, the method may include the following.

S1201: acquiring driving data of multiple users.

In this step, the driving data of the multiple users can be acquired, with driving data of each user including at least one of the following: driving data, environmental data, driving habits, and status data. Herein, the driving data can include speed, acceleration, etc.; the environmental data can include road conditions, weather status, etc.; the driving habits may include turning habits, a speeding behavior, etc.; and the status data can include engine speed, temperature, etc.

Optionally, the driving data of multiple users can be diversified, to provide richer and more personalized driving styles.

For example, system service providers of the intelligent driving vehicle can upload collected professional data including different driving styles (such as driving data of celebrity drivers or professional racers) to the server. In addition, users can also choose to upload their driving data to the server.

S1202: obtaining, for each user, a driving style vector corresponding to a user based on driving data of the user.

In this step, the driving style vector corresponding to the user can be obtained based on the driving data of each user.

Optionally, the user's driving data can be analyzed based on a preset style analysis model to obtain the driving style vector corresponding to the user. Herein, the driving style vector can be a high-dimensional set of numerical values that reflects various behavioral characteristics of the user during driving, such as acceleration habits, braking frequency, turning style, speed preferences, etc.

Optionally, the style analysis model can be a pre-trained deep learning model or an artificial intelligence (Artificial Intelligence, AI) model.

S1203: performing a dimensionality-reduction and clustering analysis on driving style vectors corresponding to the multiple users to obtain a style palette.

In this step, the dimensionality-reduction and clustering analysis can be performed on the driving style vectors in a vector space to obtain K clusters, with each cluster corresponding to a driving style. The style palette can be constructed based on the driving styles corresponding to the K clusters, where K≥2.

Optionally, the high-dimensional driving style vectors can be transformed into a lower-dimensional space using a dimensionality-reduction technique such as principal component analysis (Principal Component Analysis, PCA) and t-distributed stochastic neighbor embedding (t-Distributed Stochastic Neighbor Embedding, t-SNE). For example, a 64-dimensional driving style vector can be transformed into 2-dimension space for visualization and further analysis.

Furthermore, a clustering analysis can be performed on the driving style vectors after dimensionality-reduction to identify different driving styles. Clustering algorithm can include any one of K-means clustering algorithm, hierarchical clustering algorithm, and DBSCAN clustering algorithm. After the clustering analysis, each cluster can represent a typical driving style. By visualizing the clustering results as a style palette, each color or each marker represents a specific driving style. For example, the style palette is a two-dimensional canvas that shows different styles in a high-dimensional space, and the stylistic differences between users. Styles with high similarity are closer in distance, while styles with greater differences are farther apart. In other embodiments, the style palette may also be a three-dimensional canvas.

In the embodiments of the present application, the driving data of multiple users are acquired, and a corresponding driving style vector is generated for each user based on these data. The dimensionality-reduction and clustering analysis is performed on these driving style vectors to construct the style palette. The user can customize the driving style by selecting position information in the style palette. This personalized setting can better meet user's preferences and needs, thereby enhancing user experience.

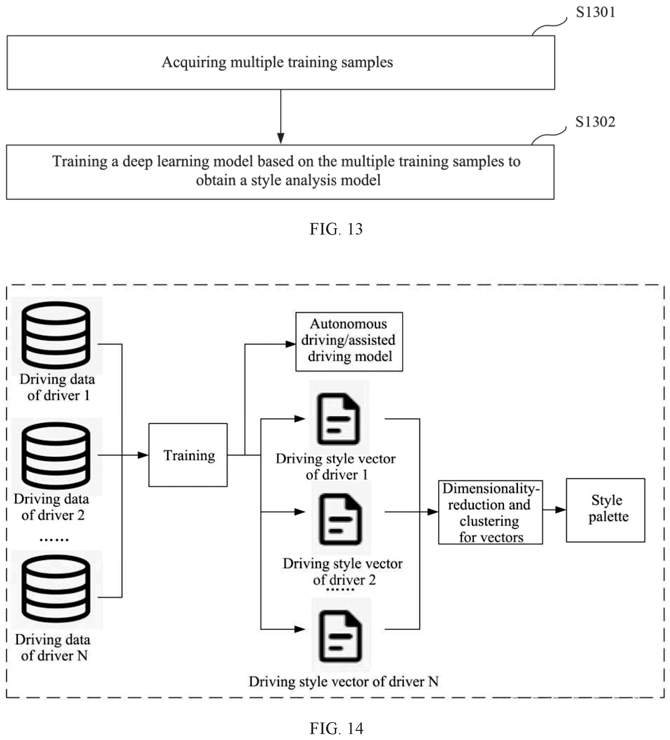

On the basis of the embodiment shown in FIG. 12, the training process of the style analysis model will be illustrated in detail hereinafter with reference to FIG. 13. The training process of the style analysis model can be performed in the server.

FIG. 13 is a schematic flowchart of a model training method for a driving style provided in Embodiment II of the present application. With reference to FIG. 13, the method may include the following.

S1301: acquiring multiple training samples.

In this step, the multiple training samples can be acquired by the server, each training sample containing driving data of one user and a driving style vector corresponding to the driving data.

The server may acquire the driving data of the user through various means such as mobile application uploading, API interfaces, cloud storage services, internet of things platforms, data synchronization mechanisms, or third-party service integration. For example, the server can interact with other applications or devices (such as cameras, sensors) through an open API interface to obtain the user's driving data.

The driving style vector can be customized by the user based on the driving data, which includes at least one of the following: driving data, environmental data, driving habits, or status data. By analyzing these data, the user can identify his driving patterns and habits, thereby customizing a driving style vector corresponding to his driving data.

S1302: training a deep learning model based on the multiple training samples to obtain a style analysis model.

In this step, the deep learning model can be trained based on the multiple training samples acquired to obtain the style analysis model for analyzing the user's driving data to obtain the driving style vectors.

Optionally, the deep learning model can be a convolutional neural network model.

In the embodiments of the present application, the deep learning model can be trained based on the multiple training samples acquired to obtain the style analysis model. Through the style analysis model, it can analyze the user's driving data to identify the driving style vectors of the user. These driving style vectors help the user understand his driving habits and patterns, and provide essential foundational data for establishing a style palette. This process can help the user achieve personalized customization and optimization of his driving styles.

FIG. 14 is a schematic diagram illustrating a principle of acquiring a style palette provided in an embodiment of the present application. With reference to FIG. 14, the deep learning model can be trained using driving data from a driver 1, driving data from a driver 2, ... , and driving data from a driver N, to obtain an autonomous driving model or an assisted driving model, as well as a driving style vector of the driver 1, a driving style vector of the driver 2, ... , and a driving style vector of the driver N. Herein, the driving style vectors of each driver can be represented by a high-dimensional vector.

The dimensionality-reduction and clustering analysis can be performed on the driving style vectors of the N drivers in the vector space to obtain a style palette.

Herein, each driver can correspond to a user, and the autonomous driving model or the assisted driving model can be the style analysis model in the above embodiments.

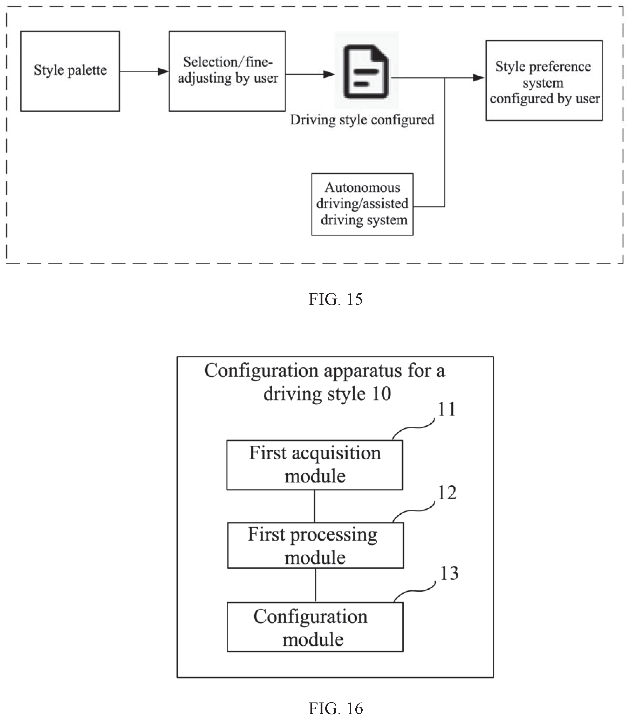

FIG. 15 is a schematic diagram illustrating a principle of applying a style palette according to an embodiment of the present application. With reference to FIG. 15, the user can perform selection and fine-adjusting in the style palette to determine the driving style configured. Based on the driving style configured by the user, the autonomous driving system or the assisted driving system of the autonomous mobile device can be configured to obtain a style preference system configured by the user. The autonomous driving system or the assisted driving system can control the autonomous mobile device based on the driving style configured by the user to match the user's driving style preference.

FIG. 16 is a schematic structural diagram of a configuration apparatus for a driving style provided in an embodiment of the present application. With reference to FIG. 16, the configuration apparatus for a driving style 10 includes:
a first acquisition module 11, configured to acquire style configuration information of an autonomous mobile device;
a first processing module 12, configured to obtain a target driving style based on the style configuration information; and
a configuration module 13, configured to configure a driving style of the autonomous mobile device based on the target driving style.

The configuration apparatus for a driving style provided in the embodiments of the present application can execute the technical solutions shown in the above method embodiments, with similar implementation principles and beneficial effects, which will not be repeated here.

In one possible implementation, the style configuration information includes any one of the following:
a driving control mode selected by a user;
image data and/or audio data collected by the autonomous mobile device; and
position information selected by the user in a style palette, where the style palette includes color zones corresponding to multiple pre-acquired driving styles.

In one possible implementation, when the style configuration information is a driving control mode selected by a user, the first processing module 12 is specifically configured to:
determine the target driving style corresponding to the driving control mode based on the driving control mode and a pre-configured mapping relationship, where the mapping relationship includes driving styles corresponding to different driving control modes.

In one possible implementation, the driving control mode is determined based on at least one driving scenario of the following: a congestion scenario, start time at an intersection, dynamics selection for lane changing, comfort during turning, handling approach when being cut in, or keeping a safe distance from an autonomous mobile device during normally travelling.

In one possible implementation, when the style configuration information is the image data and/or the audio data collected by the autonomous mobile device, the first processing module 12 is specifically configured to:
process the image data and/or the audio data based on a pre-acquired data processing model to obtain a style description vector; and
select the target driving style corresponding to the style description vector from a preset driving style library, where the driving style library stores style description vectors corresponding to different driving styles.

In one possible implementation, when the style configuration information is the image data, the data processing model is a visual processing model;
when the style configuration information is the audio data, the data processing model is a language processing model; and
when the style configuration information includes the image data and the audio data, the data processing model is a visual-language processing model.

In one possible implementation, the style description vector includes a scenario description vector and/or a preference instruction vector;
where the scenario description vector is used to indicate a driving scenario in which the autonomous mobile device is located, and the preference instruction vector is used to indicate user's preference for the driving style.

In one possible implementation, the first processing module 12 is specifically configured to:
select, from the driving style library, a driving style corresponding to a target description vector with the highest similarity to the style description vector as the target driving style.

In one possible implementation, the first processing module 12 is further configured to:
receive a data processing model sent by a server, and deploy the data processing model.

In one possible implementation, when the style configuration information is the position information selected by the user in the style palette, the first processing module 12 is specifically configured to:
determine the driving style as the target driving style when the position information falls within a color zone corresponding to any one of driving styles in the style palette;
determine at least one driving style within a preset range of the position information in the style palette when the position information is out of color zones corresponding to any driving styles; and
determine the target driving style based on the at least one driving style.

In one possible implementation, the first processing module 12 is specifically configured to:
determine the target driving style based on a distance between a color zone corresponding to each driving style of the at least one driving style and the position information.

In one possible implementation, the first processing module 12 is further configured to:
receive style palette data sent by a server; and
display the style palette on a user interface of the autonomous mobile device.

The configuration apparatus for a driving style provided in the embodiments of the present application can execute the technical solutions shown in the above method embodiments, with similar implementation principles and beneficial effects, which will not be repeated here.

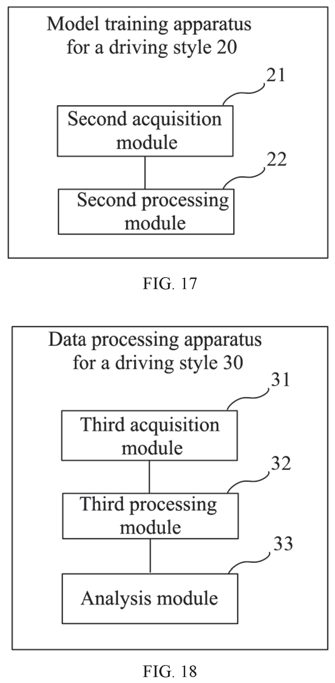

FIG. 17 is a schematic structural diagram of a model training apparatus for a driving style provided in Embodiment one of the present application. With reference to FIG. 17, the model training apparatus for a driving style 20 includes:
a second acquisition module 21, configured to acquire multiple training samples, each training sample including data to be processed and a style description vector corresponding to the data to be processed, where the data to be processed includes image data and/or audio data collected by an autonomous mobile device; and
a second processing module 22, configured to train a deep learning model based on the multiple training samples to obtain a data processing model, where the data processing model is used to analyze input data, to obtain a style description vector of a driving style.

In one possible implementation, the data processing model is any one of a visual processing model, a language processing model, or a visual-language processing model;
where the visual processing model is used to analyze the image data to obtain the style description vector of the driving style;
the language processing model is used to analyze the audio data to obtain the style description vector of the driving style; and
the visual-language processing model is used to analyze the image data and the audio data to obtain the style description vector of the driving style.

In one possible implementation, the style description vector includes a scenario description vector and/or a preference instruction vector;
where the scenario description vector is used to indicate a driving scenario in which the autonomous mobile device is located, and the preference instruction vector is used to indicate user's preference for the driving style.

The model training apparatus for a driving style provided in the embodiments of the present application can execute the technical solutions shown in the above method embodiments, with similar implementation principles and beneficial effects, which will not be repeated here.

FIG. 18 is a data processing apparatus for a driving style provided in an embodiment of the present application. With reference to FIG. 18, the data processing apparatus for a driving style 30 includes:
a third acquisition module 31, configured to acquire driving data of multiple users;
a third processing module 32, configured to obtain, for each user, a driving style vector corresponding to a user based on driving data of the user; and
an analysis module 33, configured to perform a dimensionality-reduction and clustering analysis on driving style vectors corresponding to the multiple users to obtain a style palette.

In one possible implementation, the third processing module 32 is specifically configured to:
analyze the driving data of the user based on a preset style analysis model to obtain the driving style vector corresponding to the user.

The data processing apparatus for a driving style provided in the embodiments of the present application can execute the technical solutions shown in the above method embodiments, with similar implementation principles and beneficial effects, which will not be repeated here.

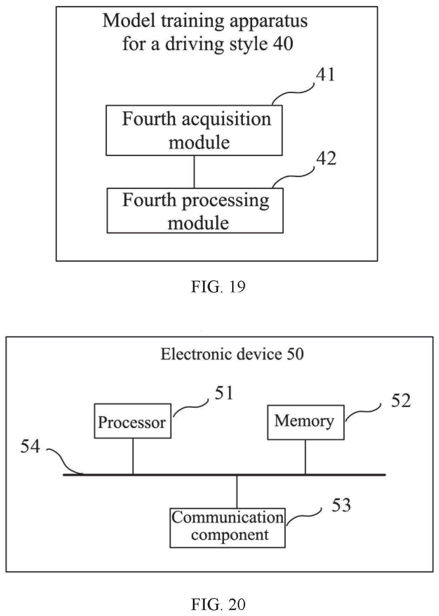

FIG. 19 is a schematic structural diagram of a model training apparatus for a driving style provided in Embodiment two of the present application. With reference to FIG. 19, the model training apparatus for a driving style 40 includes:
a fourth acquisition module 41, configured to acquire multiple training samples, each training sample including driving data of one user and a driving style vector corresponding to the driving data; and
a fourth processing module 42, configured to train a deep learning model based on the multiple training samples to obtain a style analysis model.

The model training apparatus for a driving style provided in the embodiments of the present application can execute the technical solutions shown in the above method embodiments, with similar implementation principles and beneficial effects, which will not be repeated here.

FIG. 20 is a schematic structural diagram of an electronic device provided in an embodiment of the present application. With reference to FIG. 20, the electronic device 50 may include a processor 51, a memory 52, and a communication interface 54. Exemplarily, the processor 51, the memory 52, and the communication interface 54 are interconnected via a bus 53.

The memory 52 stores a computer-executable instruction.

The processor 51 executes the computer-executable instruction stored in the memory 52, to cause the processor 51 to perform the method for processing a driving style provided in the aforementioned method embodiments.

The electronic device provided in the embodiments of the present application may be a control device of the autonomous mobile device (such as a domain controller of a vehicle), the autonomous mobile device itself, or a server. When serving as the control device for the autonomous mobile device or as the autonomous mobile device itself, it can be used to execute any method provided in the aforementioned method embodiments related to the autonomous mobile device. When serving as the server, it can be used to execute any method provided in the aforementioned method embodiments related to the server. The implementation principles and technical effects are similar and thus will not be repeated here.

An embodiment of the present application provides an autonomous mobile device, including the aforementioned electronic device. The autonomous mobile device can be cars, boats, drones, mobile robots, and other autonomous mobile devices.

An embodiment of the present application provides a computer-readable storage medium, storing a computer-executable instruction that, when executed by a processor, is configured to implement the method described in the above method embodiments.

An embodiment of the present application provides a program product, including a computer program which, when the program product runs in a computer, causes the computer to execute the method described in the aforementioned method embodiments.

An embodiment of the present application provides a computer program that, when executed by a processor, is configured to perform the method described in the aforementioned method embodiments.

Those skilled in the art should understand that the embodiments of the present application can provide methods, systems, or computer program products. Therefore, the present application may take the form of a complete hardware embodiment, a complete software embodiment, or an embodiment combining software and hardware. Moreover, the present application may take the form of a computer program product implemented on one or more computer-usable storage media (including, but not limited to, disk storage, CD-ROM, optical storage, etc.) including a computer-usable program code.

The present application is described with reference to flowcharts and/or block diagrams of methods, apparatuses (systems), and computer program products according to the embodiments of the present application. It should be understood that each step and/or block in the flowcharts and/or the block diagrams, as well as a combination of steps and/or blocks in the flowcharts and/or the block diagrams, can be implemented by computer program instructions. These computer program instructions may be provided to a general computer, a special computer, an embedded processor, or processors of other programmable data processing devices to produce a machine, such that the instructions executed by a processor of the computer or other programmable data processing devices create apparatuses for implementing the functions specified in one or more steps in the flowcharts and/or one or more blocks in the block diagrams.

These computer program instructions may also be stored in a computer-readable memory that can direct a computer or other programmable data processing devices to work in a particular manner, such that the instructions stored in the computer-readable memory produce an article including instruction means, which implement the functions specified in one or more steps in the flowcharts and/or one or more blocks in the block diagrams.

These computer program instructions may also be loaded into a computer or other programmable data processing devices to cause a series of operational steps to be performed in the computer or other programmable devices to produce computer-implemented processing, such that the instructions executed in the computer or other programmable devices provide steps for implementing the functions specified in one or more steps in the flowcharts and/or one or more blocks in the block diagrams.

In a typical configuration, the computing device includes one or more processors (CPU), input/output interfaces, network interfaces, and memories.

The memory may include forms of a non-persistent memory, a random-access memory (RAM), and/or a non-volatile memory in computer-readable media, such as a read-only memory (ROM) or a flash RAM (flash RAM). The memory is an example of the computer-readable media.

The computer-readable media include permanent and non-permanent, removable and non-removable media that can store information by any methods or technologies. The information can be computer-readable instructions, data structures, program modules, or other data. Examples of the computer storage media include, but are not limited to, a phase random-access memory (PRAM), a static random-access memory (SRAM), a dynamic random-access memory (DRAM), other types of random-access memories (RAM), a read-only memory (ROM), an electrically erasable programmable read-only memory (EEPROM), a flash memory or other memory technologies, a compact disc read-only memory (CD-ROM), a digital versatile disc (DVD) or other optical storages, magnetic tapes, magnetic disk storages or other magnetic storage devices, or any other non-transmission media that can be used to store information accessible by a computing device. As defined herein, the computer-readable media do not include transitory computer-readable media (transitory media), such as modulated data signals and carrier waves.

It should also be noted that the terms "including", "comprising", or any other variation thereof are intended to cover non-exclusive inclusion, such that a process, a method, a product, or a device including a series of elements not only includes those elements, but also may further include other elements not explicitly listed or include elements inherent to such process, method, product, or device. Without further limitations, in the element defined by the expression "including a...", it does not preclude the existence of additional identical elements in the process, method, product, or device including these elements.

The above only describes embodiments of the present application and is not intended to limit the present application. For those skilled in the art, various amendments and variations can be made to the present application. Any amendment, equivalent substitution, or improvement made within the spirit and principles of the present application shall be included within the scope of the claims of the present application.

## Claims

1. A configuration method for a driving style, wherein the method comprises:
acquiring style configuration information of an autonomous mobile device;
obtaining a target driving style based on the style configuration information;
configuring a driving style of the autonomous mobile device based on the target driving style.

2. The method according to claim 1, wherein the style configuration information comprises any one of the following:
a driving control mode selected by a user;
image data and/or audio data collected by the autonomous mobile device;
position information selected by the user in a style palette, wherein the style palette comprises color zones corresponding to multiple pre-acquired driving styles.

3. The method according to claim 1 or 2, wherein when the style configuration information is a driving control mode selected by a user, the obtaining the target driving style based on the style configuration information comprises:
determining the target driving style corresponding to the driving control mode based on the driving control mode and a pre-configured mapping relationship, wherein the mapping relationship comprises driving styles corresponding to different driving control modes.

4. The method according to claim 2 or 3, wherein the driving control mode is determined based on at least one driving scenario of a congestion scenario, start time at an intersection, dynamics selection for lane changing, comfort during turning, handling approach when being cut in, or keeping a safe distance from an autonomous mobile device during normally travelling.

5. The method according to claim 1 or 2, wherein when the style configuration information is image data and/or audio data collected by the autonomous mobile device, the obtaining the target driving style based on the style configuration information comprises:
processing the image data and/or the audio data based on a pre-acquired data processing model to obtain a style description vector;
selecting the target driving style corresponding to the style description vector from a preset driving style library, wherein the driving style library stores style description vectors corresponding to different driving styles.

6. The method according to claim 5, wherein,
when the style configuration information is the image data, the data processing model is a visual processing model;
when the style configuration information is the audio data, the data processing model is a language processing model;
when the style configuration information comprises the image data and the audio data, the data processing model is a visual-language processing model.

7. The method according to claim 5 or 6, wherein the style description vector comprises a scenario description vector and/or a preference instruction vector;
wherein the scenario description vector is used to indicate a driving scenario in which the autonomous mobile device is located, and the preference instruction vector is used to indicate user's preference for the driving style.

8. The method according to any one of claims 5-7, wherein the selecting the target driving style corresponding to the style description vector from the preset driving style library comprises:
selecting, from the driving style library, a driving style corresponding to a target description vector with the highest similarity to the style description vector as the target driving style.

9. The method according to any one of claims 5-8, wherein the method further comprises:
receiving a data processing model sent by a server, and deploying the data processing model.

10. The method according to claim 1 or 2, wherein when the style configuration information is a position information selected by a user in a style palette, the obtaining the target driving style based on the style configuration information comprises:
determining the driving style as the target driving style when the position information falls within a color zone corresponding to any one of driving styles in the style palette;
determining at least one driving style within a preset range of the position information in the style palette when the position information is out of color zones corresponding to any driving styles;
determining the target driving style based on the at least one driving style.

11. The method according to claim 10, wherein the determining the target driving style based on the at least one driving style comprises:
determining the target driving style based on a distance between a color zone corresponding to each driving style of the at least one driving style and the position information.

12. The method according to claim 10 or 11, wherein the method further comprises:
receiving style palette data sent by a server;
displaying the style palette on a user interface of the autonomous mobile device.

13. A model training method for a driving style, comprising:
acquiring multiple training samples, each training sample comprising data to be processed and a style description vector corresponding to the data to be processed, wherein the data to be processed comprises image data and/or audio data collected by an autonomous mobile device;
training a deep learning model based on the multiple training samples to obtain a data processing model, wherein the data processing model is used to analyze input data, to obtain a style description vector of the driving style.

14. The method according to claim 13, wherein the data processing model is any one of a visual processing model, a language processing model, or a visual-language processing model;
wherein the visual processing model is used to analyze the image data to obtain the style description vector of the driving style;
the language processing model is used to analyze the audio data to obtain the style description vector of the driving style;
the visual-language processing model is used to analyze the image data and the audio data to obtain the style description vector of the driving style.

15. The method according to claim 13 or 14, wherein the style description vector comprises a scenario description vector and/or a preference instruction vector;
wherein the scenario description vector is used to indicate a driving scenario in which the autonomous mobile device is located, and the preference instruction vector is used to indicate user's preference for the driving style.

16. A data processing method for a driving style, comprising:
acquiring driving data of multiple users;
obtaining, for each user, a driving style vector corresponding to a user based on driving data of the user;
performing a dimensionality-reduction and clustering analysis on driving style vectors corresponding to the multiple users to obtain a style palette.

17. The method according to claim 16, wherein the obtaining, for each user, the driving style vector corresponding to the user based on the driving data of the user comprises:
analyzing the driving data of the user based on a preset style analysis model to obtain the driving style vector corresponding to the user.

18. A model training method for a driving style, comprising:
acquiring multiple training samples, each training sample comprising driving data of one user and a driving style vector corresponding to the driving data;
training a deep learning model based on the multiple training samples to obtain a style analysis model.

19. A configuration apparatus for a driving style, wherein the apparatus comprises:
a first acquisition module, configured to acquire style configuration information of an autonomous mobile device;
a first processing module, configured to obtain a target driving style based on the style configuration information;
a configuration module, configured to configure a driving style of the autonomous mobile device based on the target driving style.

20. A model training apparatus for a driving style, comprising:
a second acquisition module, configured to acquire multiple training samples, each training sample comprising data to be processed and a style description vector corresponding to the data to be processed, wherein the data to be processed comprises image data and/or audio data collected by an autonomous mobile device;
a second processing module, configured to train a deep learning model based on the multiple training samples to obtain a data processing model, wherein the data processing model is used to analyze input data, to obtain a style description vector of a driving style.

21. A data processing apparatus for a driving style, comprising:
a third acquisition module, configured to acquire driving data of multiple users;
a third processing module, configured to obtain, for each user, a driving style vector corresponding to a user based on driving data of the user;
an analysis module, configured to perform a dimensionality-reduction and clustering analysis on driving style vectors corresponding to the multiple users to obtain a style palette.

22. A model training apparatus for a driving style, comprising:
a fourth acquisition module, configured to acquire multiple training samples, each training sample comprising driving data of one user and a driving style vector corresponding to the driving data;
a fourth processing module, configured to train a deep learning model based on the multiple training samples to obtain a style analysis model.

23. An electronic device, comprising: a processor, a memory, and a communication interface;
wherein the memory stores a computer-executable instruction;
the processor executes the computer-executable instruction stored in the memory to implement the method according to any one of claims 1-12.

24. A server, comprising: a processor, a memory, and a communication interface;
wherein the memory stores a computer-executable instruction;
the processor executes the computer-executable instruction stored in the memory to implement the method according to any one of claims 13-18.

25. A computer-readable storage medium, wherein the computer-readable storage medium stores a computer-executable instruction which, when executed by a processor, is used to implement the method according to any one of claims 1-18.

26. A program product, comprising: a computer program which, when the program product runs in a computer, causes the computer to perform the method according to any one of claims 1-18.

27. A computer program, wherein when executed by a processor, the computer program is used to perform the method according to any one of claims 1-18.

28. An autonomous mobile device, comprising the electronic device according to claim 23.
